# EUROPEAN PATENT APPLICATION

(11) **EP 4 559 595 A1**
(43) Date of publication of application: **28.05.2025**
(21) Application number: 23842806.4
(22) Date of filing: 03.07.2023
(51) Int. Cl.: B21D 43/24, B65G 59/02, B65H 1/04, B65H 3/08, B65H 3/60

(54) **WORKPIECE SUPPLY SYSTEM, WORKPIECE SUPPLY METHOD, AND WORKPIECE SUPPLY PROGRAM**

(30) Priority: 22.07.2022 JP 2022116829
(71) Applicant: Amada Co., Ltd., Isehara-shi, Kanagawa 259-1196 (JP)
(72) Inventor: IKOMA, Shu, Isehara-shi, Kanagawa 259-1196 (JP)
(74) Representative: Grünecker Patent- und Rechtsanwälte PartG mbB
(86) International application number: PCT/JP2023/024597
(87) International publication number: WO 2024/018881

(57) **Abstract**

A workpiece supply system includes a workpiece mounting table configured to form a loading area on which a plurality of groups of workpieces are able to be loaded, a magnet floater configured to separate an uppermost workpiece from a group of workpieces to be transported, by magnetizing the group of workpieces among the plurality of groups of workpieces loaded on the loading area, and a magnet moving mechanism configured to move the magnet floater along the loading area.

## Description

### Technical Field

The present invention relates to a workpiece supply system, a workpiece supply method, and a workpiece supply program.

### Background Art

In a conventional workpiece supply system in which workpieces stacked on a loading area are sequentially supplied toward a sheet material processing machine with a supply robot, there is used a magnet floater that levitates, with a magnetic force, and separates a plurality of stacked workpieces (Patent Literature 1, and the like).

For example, Patent Literature 1 discloses a magnet floater including a non-magnetic floater cover, a floater main body with a magnet, and a position adjustment mechanism for adjusting the position of the floater main body in a direction approaching or separating from the floater cover. The magnet floater in Patent Literature 1 adjusts a magnetic force of the magnet acting on the workpiece by adjusting the position of the floater main body with the position adjustment mechanism, making it possible to adjust the levitation angle of an uppermost workpiece with respect to the horizontal direction. Furthermore, the magnet floater in Patent Literature 1 is provided with a scale on the floater cover or the like, making it possible to visualize the levitation angle of the uppermost workpiece.

### Citation List

### Patent Literature

Patent Literature 1: Japanese Patent No. 6872968

### Summary of Invention

### Technical Problem

However, in Patent Literature 1, two magnet floaters are designed to be installed for one pallet loaded with workpieces. Therefore, when attempting to expand the loading area by connecting a plurality of pallets, for example, two magnet floaters will be installed for each pallet. For this reason, in the system in Patent Literature 1, there is a problem in that the number of magnet floaters in a standby state increases with the expansion of the loading area, leading to high facility costs.

One aspect of the present invention provides a workpiece supply system, a workpiece supply method, and a workpiece supply program that can suppress an increase in the number of magnet floaters to be installed with expansion of the loading area.

### Solution to Problem

A workpiece supply system according to one aspect of the present invention includes a workpiece mounting table configured to form a loading area on which a plurality of groups of workpieces are able to be loaded, a magnet floater configured to separate an uppermost workpiece from a group of workpieces to be transported, by magnetizing the group of workpieces among the plurality of groups of workpieces loaded on the loading area, and a magnet moving mechanism configured to move the magnet floater along the loading area.

A workpiece supply method according to one aspect of the present invention includes specifying a magnetic force application position of a magnet floater with respect to a group of workpieces to be transported among a plurality of groups of workpieces loaded on a loading area, moving the magnet floater to the position specified in the specifying, and applying a magnetic force to the group of workpieces to be transported at the position specified in the specifying.

A workpiece supply program according to one aspect of the present invention causes a workpiece supply system to execute a magnetic force application position specifying process of specifying a position of a magnet floater with respect to a group of workpieces to be transported among a plurality of groups of workpieces loaded on a loading area, a magnet movement process of moving the magnet floater to the position specified in the magnetic force application position specifying process, and a magnetic force application process of applying a magnetic force to the group of workpieces to be transported at the position specified in the magnetic force application position specifying process.

According to one aspect of the present invention, the workpiece supply system, the workpiece supply method, and the workpiece supply program make it possible to move the magnet floater along a loading area on which a plurality of groups of workpieces are able to be loaded. This eliminates the need to arrange the magnet floater for each group of workpieces, thereby making it possible to suppress the increase in the number of magnet floaters to be installed with the expansion of the loading area.

### Advantageous Effect of Invention

According to the workpiece supply system, the workpiece supply method, and the workpiece supply program according to one aspect of the present invention, it is possible to suppress the increase in the number of magnet floaters to be installed with the expansion of the loading area.

### Brief Description of Drawings

[Figure 1] Figure 1 is a schematic diagram illustrating a workpiece supply system according to one embodiment of the present invention.
[Figure 2] Figure 2 is a schematic diagram illustrating a magnet floater according to the present embodiment.
[Figure 3] Figure 3 is a schematic diagram illustrating a workpiece loading mechanism according to the present embodiment.
[Figure 4] Figure 4 is a schematic diagram illustrating the workpiece loading mechanism according to the present embodiment.
[Figure 5] Figure 5 is a functional block diagram illustrating a control device according to the present embodiment.
[Figure 6] Figure 6 is a schematic diagram illustrating an example of arrangement of a magnet floater with respect to the shape of a workpiece.
[Figure 7] Figure 7 is a schematic diagram illustrating an example of arrangement of a magnet floater with respect to the shape of a workpiece.
[Figure 8] Figure 8 is a schematic diagram illustrating an example of arrangement of a magnet floater with respect to the shape of a workpiece.
[Figure 9] Figure 9 is a schematic diagram illustrating an example of arrangement of a magnet floater with respect to the shape of a workpiece.

### Description of Embodiment

The best embodiment for carrying out the present invention will be described below with reference to the drawings. It should be noted that the following embodiment does not limit the invention according to each claim, and not all combinations of features described in the embodiment are essential for the solution of the invention.

### [Overall Configuration of Workpiece Supply System]

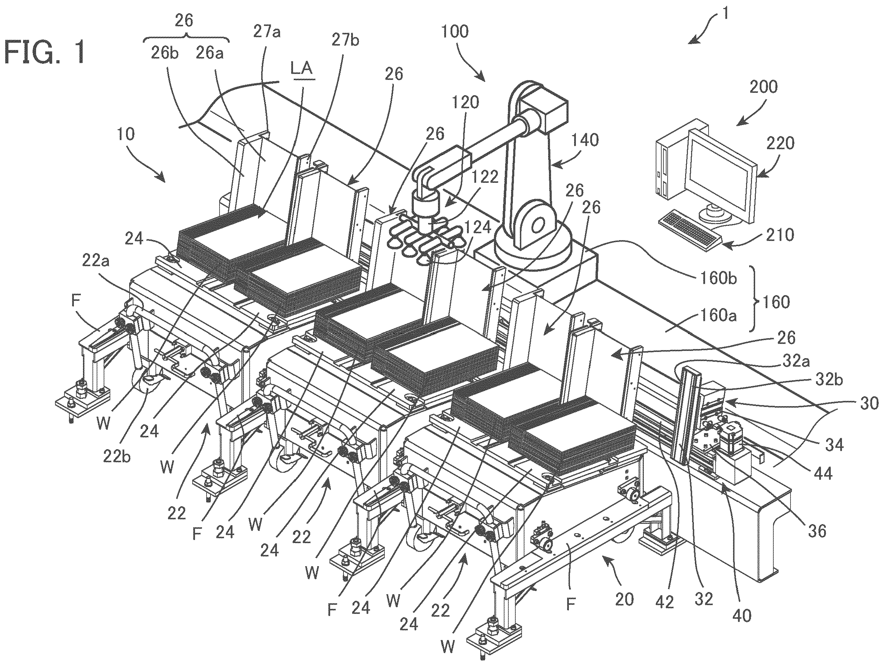

Figure 1 is a schematic diagram illustrating a workpiece supply system according to one embodiment of the present invention.

As illustrated in Figure 1, a workpiece supply system 1 according to the present embodiment includes a workpiece loading mechanism 10 in which a plurality of groups of workpieces W are loaded, a workpiece supply robot 100 configured to be able to transport an uppermost workpiece W from one of the plurality of groups of workpieces W stacked in the workpiece loading mechanism 10, and a control device 200 configured to be able to control the workpiece loading mechanism 10 and the workpiece supply robot 100. The workpiece supply system 1 according to the present embodiment may further include a processing machine (not illustrated) such as a bending machine, and an automatic processing system for the workpieces W may be configured with the workpiece supply system 1 together with the processing machine. When the automatic processing system is configured in this way, it is preferable that the workpiece supply robot 100 is arranged between the workpiece loading mechanism 10 and the processing machine.

In this specification, a "workpiece W" refers to a sheet-shaped magnetic body (sheet metal) to be transported, and a "group of workpieces W" (workpiece group) refers to a stack of workpieces W formed by stacking a plurality of workpieces W. Also, a "plurality of groups of workpieces W" mean that a plurality of groups of workpieces W formed in this way are arranged spaced away from each other in the planar direction.

### [Configuration of Workpiece Loading Mechanism]

As illustrated in Figure 1, the workpiece loading mechanism 10 includes a workpiece mounting table 20 configured to form a loading area LA on which a plurality of groups of workpieces W can be loaded, a magnet floater 30 configured to separate an uppermost workpiece W from a group of workpieces W to be transported, by magnetizing the group of workpieces W among the plurality of groups of workpieces W loaded on the loading area LA, and a magnet moving mechanism 40 configured to move the magnet floater 30 along the loading area LA.

### [Configuration of the Workpiece Mounting Table]

The workpiece mounting table 20 has a plurality of mounting surfaces 24, on each mounting surface of which a group of workpieces W can be loaded. Specifically, the workpiece mounting table 20 includes a plurality of mounting table units 22 each having a mounting surface 24, and a frame F that connects these plurality of mounting table units 22 to each other. Each mounting table unit 22 includes a handle 22a and wheels 22b, and is configured to be attachable to and detachable from the frame F. The workpiece mounting table 20 is configured to enable the number of mounting table units 22 to be installed to be increased or decreased.

Each mounting table unit 22 includes the mounting surface 24 on which a group of workpieces W is to be loaded, and an abutment plate part 26 for aligning ends of the workpieces W in the group of workpieces W mounted on the mounting surface 24. The abutment plate part 26 is provided for each mounting surface 24, and as a result, a plurality (six in the illustrated example) of abutment plate parts 26 are provided along the loading area LA.

The mounting surface 24 is inclined with respect to the horizontal direction (the direction orthogonal to the vertical direction) so that the edge on the side opposite to the workpiece supply robot 100 is located slightly above the edge on the workpiece supply robot 100 side. The plurality of mounting table units 22 are configured in which the mounting surfaces 24 are continuously or intermittently deployed along the planar direction to cooperate with each other so that the loading area LA is formed.

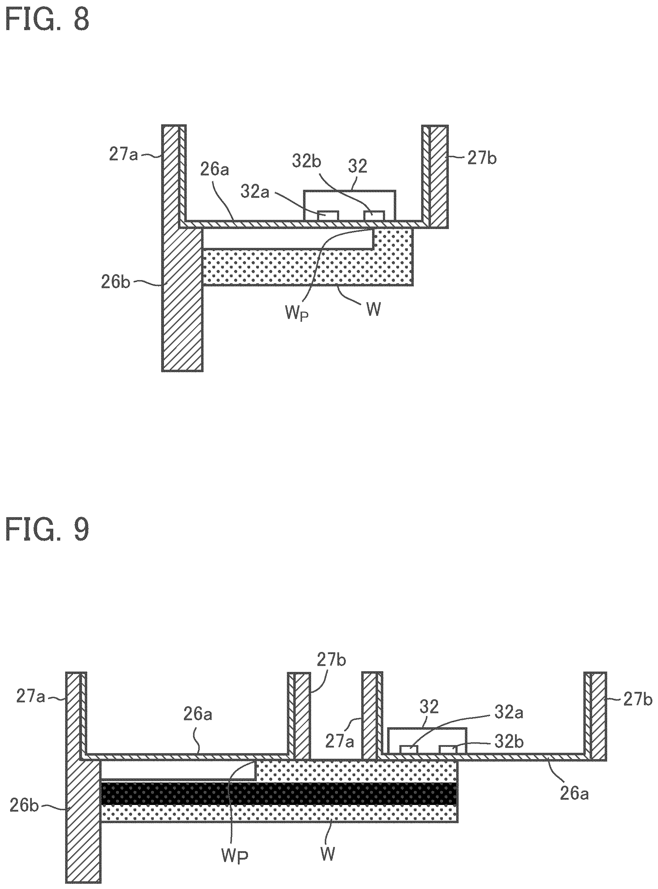

The abutment plate part 26 includes a rear plate part 26a formed of a non-magnetic sheet material, and a side plate part 26b arranged on one side edge of the rear plate part 26a. The rear plate part 26a is erected at the edge of the mounting surface 24 on the workpiece supply robot 100 side so as to be perpendicular to the mounting surface 24. The side plate part 26b extends from one side edge of the rear plate part 26a toward the mounting surface 24 side, so as to be perpendicular to the rear plate part 26a. The abutment plate part 26 is configured to be able to align the ends of the workpieces W in the group of workpieces W mounted on the mounting surface 24 by either abutting the corner portion of the group of workpieces W against the corner portion formed by the rear plate part 26a and the side plate part 26b, or by abutting one edge of the group of workpieces W against the rear plate part 26a. In a case where a large workpiece W is arranged across two or more mounting surfaces 24, as illustrated in Figure 9, for example, the side plate part 26b between the adjacent mounting surfaces 24 may be removed.

In addition, on both side edges of the rear plate part 26a, a pair of flange parts 27a, 27b are arranged to extend at a right angle to the rear plate part 26a toward the workpiece supply robot 100 side from the respective side edges.

### [Configuration of Magnet floater]

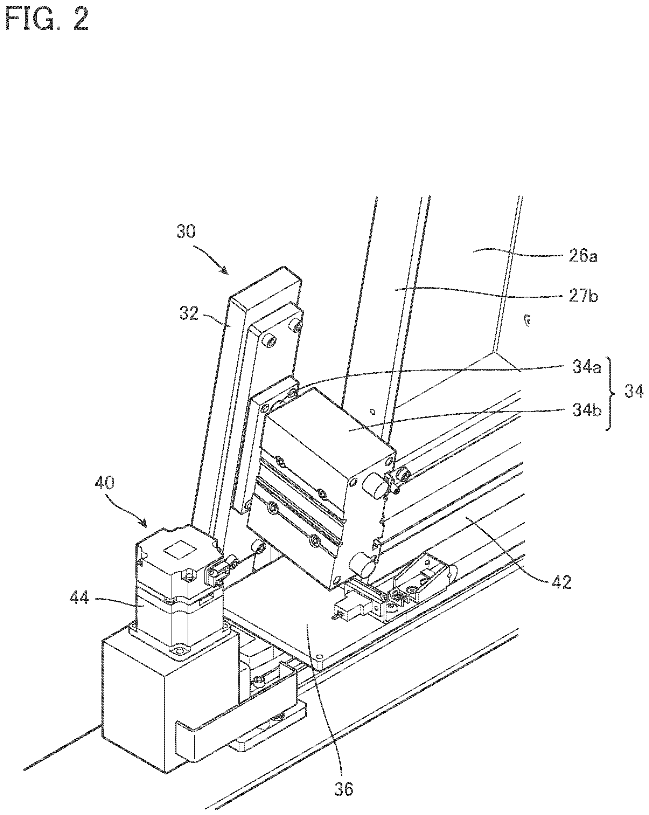

Figure 2 is a schematic diagram illustrating the magnet floater according to the present embodiment.

As illustrated in Figures 1 and 2, the magnet floater 30 includes a floater main body 32 capable of applying a magnetic force to the group of workpieces W, an advance and retreat mechanism 34 that causes the floater main body 32 to be moved in a direction of approaching or separating from the back surface of the rear plate part 26a of the abutment plate part 26, and a carriage base 36 capable of sliding along a guide rail 42, which will be described later, of the magnet moving mechanism 40.

The floater main body 32 is formed in a rectangular block shape approximately parallel to the rear plate part 26a of the abutment plate part 26, and includes a first magnet (first permanent magnet) 32a and a second magnet (second permanent magnet) 32b inside. The first magnet 32a and the second magnet 32b are segmented along the up-down direction (height direction) of the floater main body 32, and the S pole of the first magnet 32a and the N pole of the second magnet 32b are arranged spaced apart from each other in the width direction (left-right direction) of the floater main body 32.

The advance and retreat mechanism 34 is, for example, a reciprocating linear motion mechanism such as a hydraulic cylinder or a pneumatic cylinder, and specifically includes a cylinder rod 34a connected to the back surface of the floater main body 32, and a cylinder 34b that causes the cylinder rod 34a to advance and retreat using hydraulic or pneumatic pressure. The advance and retreat mechanism 34 only needs to be configured to be able to move the floater main body 32 in the direction of approaching or separating from the back surface of the rear plate part 26a of the abutment plate part 26, and is not limited to the above-mentioned hydraulic cylinder and pneumatic cylinder, and, for example, an electric reciprocating linear motion mechanism may also be used.

The carriage base 36 holds the advance and retreat mechanism 34 to be relatively immovable, and is configured to slide along the guide rail 42, which will be described later, of the magnet moving mechanism 40 to cause the advance and retreat mechanism 34 and the floater main body 32 to be moved toward any group of workpieces W. As the carriage base 36, an electric slider driven by a drive section 44, which will be described later, of the magnet moving mechanism 40 can be suitably used, but it is not limited to this.

By providing the above configuration, the magnet floater 30 is configured to be able to switch between an on state where a magnetic force is applied to the group of workpieces W and an off state where a magnetic force to be applied to the group of workpieces W is reduced compared to the magnetic force in the on state. Specifically, when the floater main body 32 is caused to approach the rear plate part 26a of the abutment plate part 26 by the advance and retreat mechanism 34, the magnet floater 30 switches to the on state where the magnetic force is applied to the group of workpieces W. In addition, the magnet floater 30 is configured to switch to the off state where the magnetic force on the group of workpieces W is reduced or eliminated, when the floater main body 32 is caused to separate from the rear plate part 26a of the abutment plate part 26 by the advance and retreat mechanism 34.

In this specification, the "on state" refers to a state where a magnetic force enough to allow levitation of the end of the uppermost workpiece W from the lower workpiece W beneath the uppermost workpiece W is applied to the group of workpieces W, and the "off state" refers to a state where a magnetic force weaker than the magnetic force in the on state is applied to the group of workpieces W. In this specification, the "off state" not only refers to a state where no magnetic force is applied to the group of workpieces W, but also includes states where, for example, a weak magnetic force is applied such that the end of the uppermost workpiece W is slightly levitated from the lower workpiece W and where a very weak magnetic force is applied such that the end of the uppermost workpiece W does not separate from the lower workpiece W.

### [Configuration of Magnet Moving Mechanism]

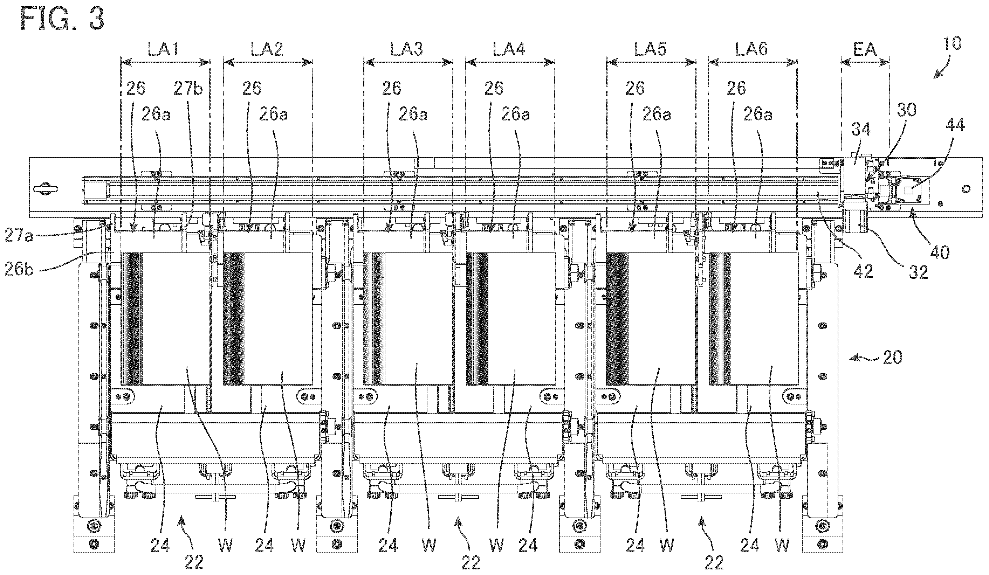

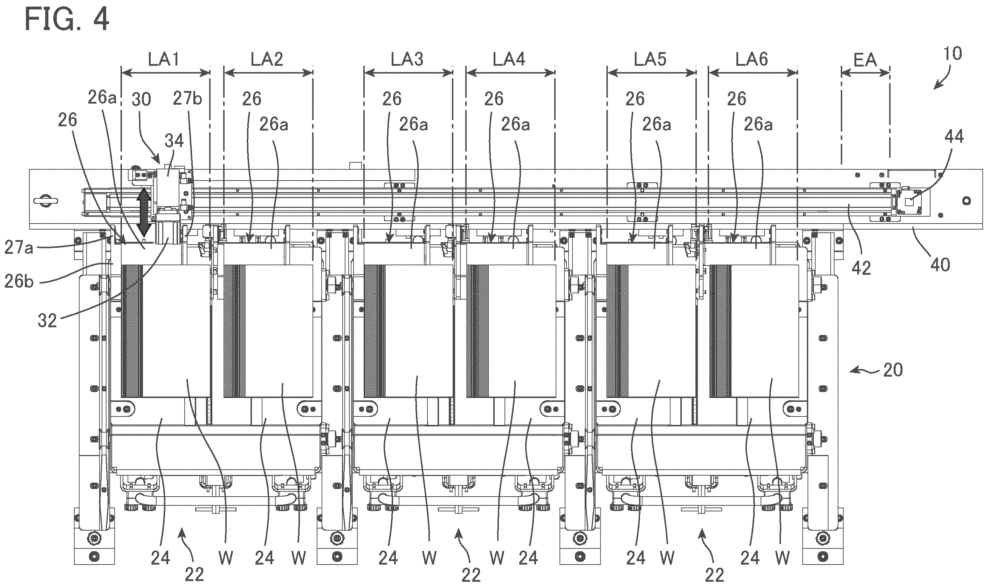

Figures 3 and 4 each are schematic diagrams illustrating the workpiece loading mechanism according to the present embodiment.

As illustrated in Figures 1 and 3, the magnet moving mechanism 40 includes the guide rail 42 extending across the plurality of mounting table units 22 of the workpiece loading mechanism 10, and the drive section 44 for generating a driving force to move the carriage base 36 of the magnet floater 30 along the guide rail 42.

The magnet moving mechanism 40 is configured to be able to move the magnet floater 30 across the plurality of mounting surfaces 24 by driving the drive section 44, and to stop the magnet floater 30 at a position corresponding to any mounting surface 24. In the present embodiment, the magnet moving mechanism 40 is a linear motion mechanism that reciprocates the magnet floater 30 linearly along the guide rail 42, but is not limited to this.

The drive section 44 is preferably a drive source capable of controlling the position of the carriage base 36 of the magnet floater 30, and for example, an electric motor such as a servomotor can be suitably used. However, the drive section 44 is not limited to an electric motor and may be a hydraulic or pneumatic drive source.

The magnet moving mechanism 40 is configured to automatically move the magnet floater 30 to the mounting surface 24 on which the group of workpieces W to be transported is mounted, among the plurality of groups of workpieces W loaded on the loading area LA, through automatic control by a movement control unit 242 of a magnet control unit 240, which will be described later. In addition, the magnet moving mechanism 40 is configured to allow the position of the magnet floater 30 to be adjusted manually.

### [Configuration of Workpiece Supply Robot]

The workpiece supply robot 100 is arranged between the workpiece loading mechanism 10 and a transport destination (for example, the processing machine or the like) of the workpiece W, and is configured to hold the workpiece W on the workpiece loading mechanism 10 and to transport the workpiece W toward the transport destination such as the processing machine.

Specifically, as illustrated in Figure 1, the workpiece supply robot 100 includes a moving mechanism 160 for moving the workpiece supply robot 100, a robotic hand 120 capable of holding the workpiece W, and an arm part 140 for causing the robotic hand 120 to approach or separate from the workpiece W.

The moving mechanism 160 is a so-called linear motion mechanism that includes a rail part 160a that is laid on a floor surface, a base table 160b that is movable along the rail part 160a, and a base table drive section (not illustrated) that drives the base table 160b, and is configured to move the workpiece supply robot 100 on the floor surface based on a control signal from a robot control unit 230, which will be described later, of the control device 200. Note that the moving mechanism 160 can employ various known configurations, and thus detailed description thereof will be omitted.

One end of the arm part 140 is connected to the base table 160b of the moving mechanism 160, the other end thereof is connected to the robotic hand 120, and the arm part 140 is configured to cause the robotic hand 120 to approach or separate from the workpiece W based on the control signal from the robot control unit 230 of the control device 200. In the present embodiment, the arm part 140 is an articulated arm including six control axes, and is configured to be able to perform not only transport of the workpiece W from the workpiece loading mechanism 10 but also transport (carrying-in) of the workpiece W to the processing machine or the like, assistance of the processing (bending) of the workpiece W, and transport (carrying-out) of a product (bent part) from the processing machine or the like. Note that the arm part 140 can employ various known configurations, and thus detailed description thereof will be omitted. Furthermore, the arm part 140 is not limited to the configuration of the articulated arm including the six control axes described above, and various known configurations can be arbitrarily employed.

The robotic hand 120 includes a hand main body 122 that is detachably mounted on the tip end of the arm part 140, a plurality of attraction parts 124 attached to the hand main body 122 and configured to be able to hold the workpiece W, and a surface detection part (not illustrated) capable of detecting that the robotic hand 120 has contacted the workpiece W. Each attraction part 124 is connected, via piping, to an air suction source (not illustrated) that sucks air. Each attraction part 124 includes, at a lower end thereof, a flat attraction pad that can be attracted to (can contact) a surface of the workpiece W, and is configured to be attracted to the surface of the uppermost workpiece W from among the group of workpieces W stacked on the workpiece mounting table 20 with a suction force of the air generated by the air suction source. Note that a shape of the hand main body 122 is not limited to an illustrated example, and can be arbitrarily changed in accordance with a shape and the like of the workpiece W. Furthermore, the robotic hand 120 is not limited to the attraction method described above, and various known configurations can be arbitrarily employed.

### [Configuration of Control Device]

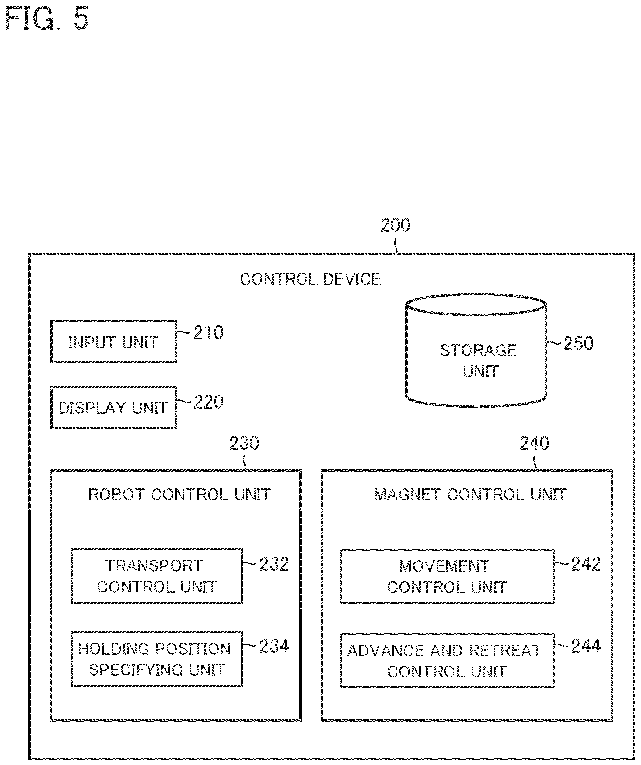

Figure 5 is a functional block diagram illustrating the control device according to the present embodiment.

As illustrated in Figure 5, the control device 200 includes an input unit 210, a display unit 220, the robot control unit 230, the magnet control unit 240, and a storage unit 250. Furthermore, the control device 200 is connected to the workpiece loading mechanism 10 and the workpiece supply robot 100 by various known configurations.

The input unit 210 is comprised of, for example, input devices such as a keyboard, a mouse, a press button switch, a tact switch, and a key lock switch, and operating the input unit 210 enables input of information normally required in the workpiece supply system 1.

The display unit 220 is provided with a display as a display device, and is configured to enable screen display and the like normally required in the workpiece supply system 1. The display unit 220 can be comprised of a touch panel having a function of the input unit 210. When the display unit 220 is comprised of a touch panel, a user can input, to the control device 200, various types of information by operating the display unit 220, for example.

Note that the configurations of the input unit 210 and the display unit 220 are not limited to the configurations described above, and they may be any configurations having similar functions (for example, display means, input means, and the like that can be used from a remote place).

The robot control unit 230, as illustrated in Figure 5, includes a transport control unit 232 and a holding position specifying unit 234.

The holding position specifying unit 234 performs a holding position specifying process of specifying a holding position of the robotic hand 120 of the workpiece supply robot 100 with respect to the workpiece W. Specifically, the holding position specifying unit 234 extracts coordinate data of a workpiece W and the holding position of the robotic hand 120 with respect to the workpiece W from the workpiece supply program of the storage unit 250, which will be described later, and specifies the holding position.

The transport control unit 232 is configured to enable computerized numerical control (CNC control) of the workpiece supply robot 100, and performs a robotic hand control process of releasing the uppermost workpiece W from the group of workpieces W.

Specifically, the transport control unit 232 is configured to control, when transporting (carrying out) the workpiece W from the workpiece loading mechanism 10, the moving mechanism 160 so that the arm part 140 reaches a position aligned with the group of workpieces W to be transported among a plurality of groups of workpieces W loaded in the workpiece loading mechanism 10, based on the workpiece supply program stored in the storage unit 250. In addition, the transport control unit 232 is configured to control the arm part 140 so that the robotic hand 120 reaches the uppermost workpiece W in the group of workpieces W to be transported.

Furthermore, the transport control unit 232 is configured to control, when the robotic hand 120 reaches the uppermost workpiece W, the air suction source so that the uppermost workpiece W is held by the robotic hand 120 and to control the moving mechanism 160 and the arm part 140 so that the uppermost workpiece W held is lifted so as to be transported toward a transport destination such as the processing machine. At this time, the transport control unit 232 controls the arm part 140 to operate in the order of the first elevating operation, the stopping operation, and the second elevating operation as described above.

The magnet control unit 240 is configured to enable computerized numerical control (CNC control) of the workpiece loading mechanism 10, and performs a magnetic force control process of applying the magnetic force of the magnet floater 30 to the group of workpieces W to be transported. Specifically, the magnet control unit 240, as illustrated in Figure 5, includes the movement control unit 242 and an advance and retreat control unit 244.

The movement control unit 242 is configured to control the magnet moving mechanism 40 so that the magnet floater 30 reaches a position aligned with the group of workpieces W to be transported among a plurality of groups of workpieces W loaded on the loading area LA, based on the workpiece supply program stored in the storage unit 250.

Specifically, the movement control unit 242 specifies the stop position (magnetic force application position) of the magnet floater 30 with respect to the group of workpieces W from the workpiece supply program in the storage unit 250. In addition, the movement control unit 242 is configured to control the magnet moving mechanism 40 so that at least one of the first magnet 32a and the second magnet 32b is located at a position aligned with the group of workpieces W to be transported, based on the specified magnetic force application position. Here, the "position aligned with the group of workpieces W" means that, when viewed from the direction facing the rear plate part 26a of the abutment plate part 26, either or both of the first magnet 32a and the second magnet 32b are located within the projected area of the group of workpieces W.

Here, the magnetic force application position of the magnet floater 30 (the stop position with respect to the group of workpieces W) is a position where at least one of the first magnet 32a and the second magnet 32b is aligned with the group of workpieces W to be transported. For example, it can be determined by the following methods (1) to (4). In this case, the position (1) below may be considered as the basic position, and the positions (2) to (4) below may be considered as alternative positions to be selected if the position (1) is not feasible.

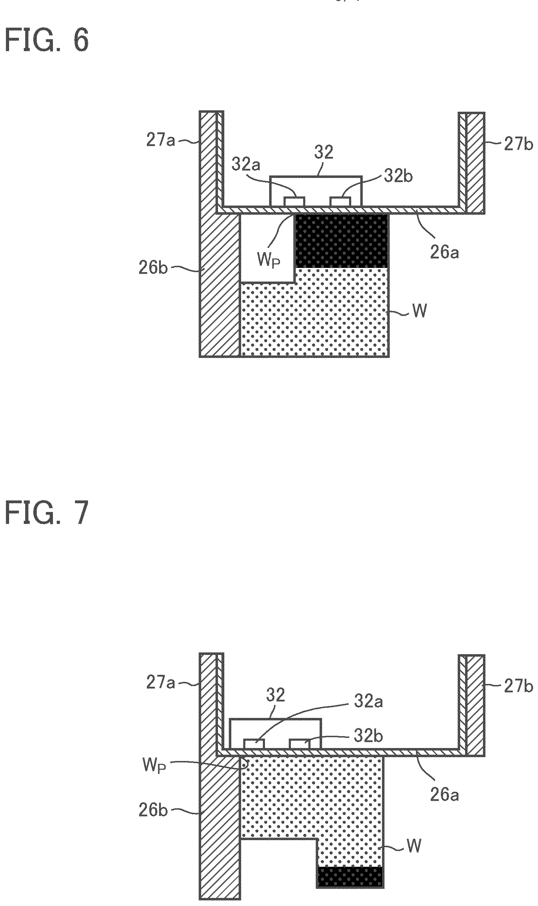

Figure 6 is a schematic diagram illustrating an example of the arrangement of the magnet floater with respect to the shape of a workpiece.
(1) As illustrated in Figure 6, the position where a workpiece end Wp on the side plate part 26b side in the workpiece edge abutting on the rear plate part 26a is aligned with the magnet on the side plate part 26b side (the first magnet 32a in this embodiment). In other words, in the direction orthogonal to the rear plate part 26a, the position where the workpiece end Wp and the first magnet 32a are aligned on a straight line.
   Figure 7 is a schematic diagram illustrating an example of the arrangement of the magnet floater with respect to the shape of a workpiece.
(2) As illustrated in Figure 7, the position where the first magnet 32a is farther from the side plate part 26b than the workpiece end Wp. The position of this (2) can be suitably selected in a case where the flange part 27a interferes with the floater main body 32 at the position of the above (1).
   Figure 8 is a schematic diagram illustrating an example of the arrangement of the magnet floater with respect to the shape of a workpiece.
(3) As illustrated in Figure 8, the position where the workpiece end Wp is aligned with the magnet (the second magnet 32b in this embodiment) on the opposite side of the side plate part 26b. That is, in the direction orthogonal to the rear plate part 26a, the position where the workpiece end Wp and the second magnet 32b are aligned on a straight line. The position of this (3) can be suitably selected in a case where the flange part 27b interferes with the floater main body 32 at the positions of the above (1) and (2).
   Figure 9 is a schematic diagram illustrating an example of the arrangement of the magnet floater with respect to the shape of a workpiece.
(4) As illustrated in Figure 9, in a case where the group of workpieces W is arranged across two or more mounting surfaces 24, the position that is within the range of the rear plate part 26a on the side (the right side in Figure 9) where the side plate part 26b is removed and where at least one of the first magnet 32a and the second magnet 32b is aligned with the group of workpieces W. When the group of workpieces W is arranged across two or more mounting surfaces 24, the position of this (4) can be suitably selected in a case where the floater main body 32 interferes with the flange part 27b in the range of the rear plate part 26a on the side (the left side in Figure 9) where the side plate part 26b is provided.

Note that the magnetic force application position included in the workpiece supply program may be set arbitrarily by the user based on the above methods (1) to (4), or may be automatically preset based on the position of the group of workpieces W and the above methods (1) to (4). In the latter case, it may be possible for the user to edit the preset magnetic force application position.

The advance and retreat control unit 244 is configured to control the advance and retreat mechanism 34 so that the magnet floater 30 switches from the off state to the on state after the magnet floater 30 reaches the position (magnetic force application position) aligned with the group of workpieces W to be transported. Additionally, the advance and retreat control unit 244 is configured to control the advance and retreat mechanism 34 so that the magnet floater 30 switches from the on state to the off state before the magnet floater 30 starts moving toward the next group of workpieces W to be transported. Alternatively, the advance and retreat control unit 244 may control the advance and retreat mechanism 34 to switch the magnet floater 30 between the on state and the off state each time the workpiece W is carried out, in conjunction with the operation of the workpiece supply robot 100.

The storage unit 250 stores the workpiece supply program for causing the workpiece supply robot 100 to execute the transport (carrying-out) of the workpiece W from the workpiece loading mechanism 10, the transport (carrying-in) of the workpiece W to the processing machine or the like, the assistance of the processing (bending) of the workpiece W, and the transport (carrying-out) of a product (bent part) from the processing machine or the like. The workpiece supply program is configured such that each function of the above-described robot control unit 230 and magnet control unit 240 is achieved when the workpiece supply program is executed.

Specifically, the workpiece supply program is configured to cause the workpiece supply robot 100 of the workpiece supply system 1 to execute a holding position specifying process of specifying a holding position of the robotic hand 120 with respect to the workpiece W, and a transport control process of driving the moving mechanism 160 and the arm part 140 so that the robotic hand 120 reaches the position specified in the holding position specifying process. Note that the specific processing contents of the holding position specifying process and the transport control process are as described in the functions of the holding position specifying unit 234 and the transport control unit 232 mentioned above, and thus descriptions thereof will be omitted.

The workpiece supply program is configured to cause the workpiece loading mechanism 10 of the workpiece supply system 1 to execute a magnetic force application position specifying process of specifying a position of the magnet floater 30 with respect to the group of workpieces W to be transported among the plurality of groups of workpieces W loaded on the loading area LA, a magnet movement process of moving the magnet floater 30 to the position specified in the magnetic force application position specifying process, and a magnetic force application process of applying a magnetic force to the group of workpieces W to be transported at the position specified in the magnetic force application position specifying process. Note that the specific processing contents of the magnetic force application position specifying process, the magnet movement process, and the magnetic force application process are as described in the functions of the movement control unit 242 and the advance and retreat control unit 244 mentioned above, and thus descriptions thereof will be omitted.

### [Workpiece Supply Method according to Present Embodiment]

Next, a series of the workpiece supply methods of the workpiece supply system 1 described above will be described.

Specifically, first, the control device 200 reads a workpiece supply program from the storage unit 250, and from the information included in the read workpiece supply program, specifies the holding position of the robotic hand 120 with respect to the group of workpieces W to be transported among the plurality of groups of workpieces W loaded on the loading area LA, and specifies the position of the magnet floater 30 with respect to the group of workpieces W to be transported (holding position specifying step, magnetic force application position specifying step). Then, the robot control unit 230 of the control device 200 outputs a control signal to the workpiece supply robot 100, and the magnet control unit 240 outputs a control signal to the workpiece loading mechanism 10.

The workpiece supply robot 100 moves to the mounting surface 24 on which the group of workpieces W to be transported is mounted, based on the control signal from the robot control unit 230 (robot moving step). Also, the magnet floater 30 similarly moves to the position (magnetic force application position) specified in the magnetic force application position specifying step, based on the control signal from the magnet control unit 240 (magnet moving step). In this magnet moving step, the magnet floater 30 is in an off state where the floater main body 32 has retreated.

When the workpiece supply robot 100 reaches the mounting surface 24 on which the group of workpieces W to be transported is mounted, it executes the workpiece separation process of separating the uppermost workpiece W from the group of workpieces W based on the control signal from the robot control unit 230 (workpiece separation step). Specifically, the workpiece supply robot 100 moves to the mounting surface 24 on which the group of workpieces W to be transported is mounted, and then, based on the control signal from the robot control unit 230, the attraction parts 124 of the robotic hand 120 are brought into contact with the uppermost workpiece W in the group of workpieces W stacked on the mounting surface 24, and the attraction parts 124 are attracted to the surface of the uppermost workpiece W by the suction force generated by the air suction source. Then, in the state where the attraction parts 124 are attracted to the surface of the uppermost workpiece W, the workpiece supply robot 100, based on the control signal from the robot control unit 230, lifts the uppermost workpiece W from the group of workpieces W, thereby separating the uppermost workpiece W from the group of workpieces W.

Also, the magnet floater 30 applies a magnetic force to the group of workpieces W to be transported (magnetic force application step) at the position specified in the magnetic force application position specifying step (magnetic force application position), based on the control signal from the magnet control unit 240. Specifically, when the floater main body 32 is caused to approach the rear plate part 26a of the abutment plate part 26 by advancing the cylinder rod 34a of the advance and retreat mechanism 34, the magnet floater 30 switches from the off state to the on state. Thus, a stronger magnetic force than that in the off state is applied to the group of workpieces W.

Note that the magnetic force application step may be started before the workpiece separation step, or simultaneously with or after the workpiece separation step. That is, the workpiece supply robot 100 may operate to contact the uppermost workpiece W in a state where the uppermost workpiece W is levitated in the magnetic force application step, or it may contact the uppermost workpiece W before the magnetic force is applied, and then operate to separate the uppermost workpiece W from the group of workpieces W in a state where the magnetic force is applied to the group of workpieces W in the magnetic force application step. Also, the magnet floater 30 may remain in the on state until all the workpieces W to be transported are transported, or it may be switched between the on state and the off state during the period in which one workpiece W is transported.

Then, based on the control signal from the robot control unit 230, the workpiece supply robot 100 supplies the uppermost workpiece W, which has been released from the group of workpieces W in the workpiece separation step, to the transport destination such as a processing machine. The series of the operations of the workpiece supply method by the workpiece supply system 1 according to the present embodiment are executed in the above-described steps.

### [Advantages of Workpiece Supply System according to Present Embodiment]

As described above, the workpiece supply system 1 according to the present embodiment includes the workpiece mounting table 20 configured to form the loading area LA on which a plurality of groups of workpieces W are able to be loaded, the magnet floater 30 configured to separate an uppermost workpiece W from a group of workpieces W to be transported, by magnetizing the group of workpieces W among the plurality of groups of workpieces W loaded on the loading area LA, and the magnet moving mechanism 40 configured to move the magnet floater 30 along the loading area LA.

According to the workpiece supply system 1 of the present embodiment having such a configuration, it is possible to move the magnet floater 30 along the loading area LA on which the plurality of groups of workpieces W are able to be loaded. This eliminates the need to arrange the magnet floater 30 for each group of workpieces W, thereby making it possible to suppress the increase in the number of magnet floaters 30 to be installed with the expansion of the loading area LA.

In the workpiece supply system 1 according to the present embodiment, the workpiece mounting table 20 has a plurality of mounting surfaces 24, on each mounting surface of which a group of workpieces W is able to be loaded, and the magnet moving mechanism 40 is configured to be able to move the magnet floater 30 across the plurality of mounting surfaces 24 and to stop the magnet floater 30 at a position corresponding to any mounting surface 24. Providing such a configuration enables the workpiece supply system 1 according to the present embodiment to freely move and stop the magnet floater 30 across the plurality of mounting surfaces 24, thus having the advantage of excellent workability.

Furthermore, in the workpiece supply system 1 according to the present embodiment, the workpiece mounting table 20 includes the plurality of mounting table units 22, and each mounting table unit 22 includes the mounting surface 24 and the abutment plate part 26 for aligning the ends of the workpieces W in the group of workpieces W mounted on the mounting surface 24. By providing such a configuration, the workpiece supply system 1 according to the present embodiment has advantages in that the workpieces W in the group of workpieces W can be neatly aligned on the mounting surface 24, and scaling up or scaling down of the loading area LA can be easily performed by increasing or decreasing the number of mounting table units 22 to be installed.

The workpiece supply system 1 according to the present embodiment further includes a movement control unit 242 configured to control the magnet moving mechanism 40 so that the magnet floater 30 reaches a position aligned with the group of workpieces W to be transported among the plurality of groups of workpieces W loaded on the loading area LA. By providing such a configuration, the workpiece supply system 1 according to the present embodiment has an advantage of being able to automatically move the magnet floater 30 to the mounting surface 24 on which the group of workpieces W to be transported is mounted. This advantage becomes particularly noticeable when performing an automatic operation with the workpiece supply robot 100. That is, in the configuration in which the magnet floater 30 is moved only manually, it is difficult to move the magnet floater 30 during the automatic operation of the workpiece supply robot 100. However, according to the workpiece supply system 1 of the present embodiment, it is possible to move the magnet floater 30 even during the automatic operation of the workpiece supply robot 100.

Furthermore, in the workpiece supply system 1 according to the present embodiment, the magnet floater 30 includes the first magnet 32a and the second magnet 32b, and the S pole of the first magnet 32a and the N pole of the second magnet 32b are arranged spaced apart from each other in the width direction of the magnet floater 30. The movement control unit 242 controls the magnet moving mechanism 40 so that at least one of the first magnet 32a and the second magnet 32b is located at a position aligned with the group of workpieces W to be transported. By providing such a configuration, the workpiece supply system 1 according to the present embodiment can automatically move the magnet floater 30 to an appropriate position based on the shape of the workpiece W and perform the peeling operation. Therefore, compared to manually adjusting the position of the magnet floater 30, it is possible to reduce the work burden and suppress transport failures and the like caused by peeling defects.

### [Modified Examples]

Although the preferred embodiment of the present invention has been described above, the technical scope of the present invention is not limited to the scopes described in the present and second embodiments. Various modifications or improvements can be added to the embodiment described above.

For example, the workpiece supply system 1 may further include a camera for specifying the group of workpieces W stacked on the loading area LA, and the control device 200 may be configured to control the workpiece loading mechanism 10 and the workpiece supply robot 100 based on the position of the group of workpieces W specified by the camera.

In the embodiment described above, the magnet floater 30 has been described as switching between the on state and the off state by the advance and retreat mechanism 34 causing the floater main body 32 to advance and retreat, but it is not limited to this. For example, the advance and retreat mechanism 34 may be configured to be able to adjust the magnetic force to be applied to the workpiece W by changing the advance and retreat distance of the floater main body 32 in multiple stages between the on state and the off state. Also, when using an electromagnet as a magnet, it can be configured to switch between the on state and the off state by turning the power on and off.

Furthermore, in the above-described embodiment, it has been described as a configuration in which only one magnet floater 30 is installed, but it is not limited to this, and two or more may be installed.

In the embodiment described above, the magnet floater 30 has been described as being configured to reciprocate along one direction (for example, the X direction), but it is not limited to this and may be configured to be able to reciprocate along a plurality of directions (for example, the X direction and the Y direction). For example, a plurality of mounting table units 22 may be arranged in an L-shape, and guide rails 42 may be laid in an L-shape along each side of the L-shape, allowing the magnet floater 30 to reciprocate along the L-shaped guide rails 42. In this case, the magnet floater 30 may be configured to be movable across both of the guide rail 42 extending in the X direction and the guide rail 42 extending in the Y direction, or the magnet floater 30 may be arranged on each of the guide rail 42 extending in the X direction and the guide rail 42 extending in the Y direction.

### Reference Signs List

- 1:: Workpiece supply system
- 10:: Workpiece loading mechanism
- 20:: Workpiece mounting table
- 22:: Mounting table unit
- 22a:: Handle
- 22b:: Wheel
- 24:: Mounting surface
- 26:: Abutment plate part
- 26a:: Rear plate part
- 26b:: Side plate part
- 27a:: Flange part
- 27b:: Flange part
- 30:: Magnet floater
- 32:: Floater main body
- 32a:: First magnet
- 32b:: Second magnet
- 34:: Advance and retreat mechanism
- 34a:: Cylinder rod
- 34b:: Cylinder
- 36:: Carriage base
- 40:: Magnet moving mechanism
- 42:: Guide rail
- 44:: Drive section
- 100:: Workpiece supply robot
- 120:: Robotic hand
- 122:: Hand main body
- 124:: Attraction part
- 140:: Arm part
- 160:: Moving mechanism
- 160a:: Rail part
- 160b:: Base table
- 200:: Control device
- 210:: Input unit
- 220:: Display unit
- 230:: Robot control unit
- 232:: Transport control unit
- 234:: Holding position specifying unit
- 240:: Magnet control unit
- 242:: Movement control unit
- 244:: Advance and retreat control unit
- 250:: Storage unit
- F:: Frame
- LA:: Loading area
- W:: Workpiece
- Wp:: Workpiece end

## Claims

1. A workpiece supply system, comprising:
a workpiece mounting table configured to form a loading area on which a plurality of groups of workpieces are able to be loaded;
a magnet floater configured to separate an uppermost workpiece from a group of workpieces to be transported, by magnetizing the group of workpieces among the plurality of groups of workpieces loaded on the loading area; and
a magnet moving mechanism configured to move the magnet floater along the loading area.

2. The workpiece supply system according to claim 1,
wherein
the workpiece mounting table has a plurality of mounting surfaces, on each mounting surface of which a group of workpieces is able to be loaded, and
the magnet moving mechanism is configured to be able to move the magnet floater across the plurality of mounting surfaces and to stop the magnet floater at a position corresponding to any of the mounting surfaces.

3. The workpiece supply system according to claim 2,
wherein
the workpiece mounting table includes a plurality of mounting table units, and
the mounting table units each include the mounting surface and an abutment plate part for aligning ends of the workpieces in the group of workpieces loaded on the mounting surface.

4. The workpiece supply system according to any one of claims 1 to 3, further comprising:
a movement control unit configured to control the magnet moving mechanism so that the magnet floater reaches a position aligned with the group of workpieces to be transported among the plurality of groups of workpieces loaded on the loading area.

5. The workpiece supply system according to claim 4,
wherein
the magnet floater includes a first magnet and a second magnet,
an S pole of the first magnet and an N pole of the second magnet are arranged spaced apart from each other in a width direction of the magnet floater, and
the movement control unit controls the magnet moving mechanism so that at least one of the first magnet and the second magnet is located at a position aligned with the group of workpieces to be transported.

6. A workpiece supply method, comprising:
specifying a magnetic force application position of a magnet floater with respect to a group of workpieces to be transported among a plurality of groups of workpieces loaded on a loading area;
moving the magnet floater to the position specified in the specifying; and
applying a magnetic force to the group of workpieces to be transported at the position specified in the specifying.

7. A workpiece supply program causing a workpiece supply system to execute:
a magnetic force application position specifying process of specifying a position of a magnet floater with respect to a group of workpieces to be transported among a plurality of groups of workpieces loaded on a loading area;
a magnet movement process of moving the magnet floater to the position specified in the magnetic force application position specifying process; and
a magnetic force application process of applying a magnetic force to the group of workpieces to be transported at the position specified in the magnetic force application position specifying process.
